# EUROPÄISCHE PATENTSCHRIFT

(11) **EP 1 128 902 B1**
(45) Veröffentlichungstag und Bekanntmachung des Hinweises auf die Patenterteilung: **26.04.2006**
(21) Anmeldenummer: 99971737.4
(22) Anmeldetag: 26.10.1999
(51) Int. Cl.: B01J 19/00, G01N 35/02

(54) **PROBENSORTIER-, ÜBERGABE- UND AUFNAHMEVORRICHTUNG FÜR MIKROPERLEN UND VERFAHREN ZU DEREN BETRIEB**
SAMPLE SORTING, CONVEYING AND RECEIVING DEVICE FOR MICROSPHERES AND METHOD FOR OPERATING THE SAME
DISPOSITIF PERMETTANT DE TRIER DES ECHANTILLONS, DE TRANSFERER ET DE COLLECTER DES MICROPERLES ET PROCEDE PERMETTANT DE FAIRE FONCTIONNER LEDIT DISPOSITIF

(30) Priorität: 27.10.1998 DE 19850233
(43) Veröffentlichungstag der Anmeldung: 05.09.2001
(73) Patentinhaber: Nanomics GmbH, 98693 Ilmenau (DE)
(72) Erfinder: DÖRING, Michael, D-22851 Norderstedt (DE); MAYER, Günter, D-07749 Jena (DE); SCHLINGLOFF, Gregor, D-84572 Klein-Gerau (DE); SCHOBER, Andreas, D-64291 Darmstadt (DE)
(74) Vertreter: Bock, Gerhard
(86) Internationale Anmeldenummer: PCT/EP1999/008080
(87) Internationale Veröffentlichungsnummer: WO 2000/027520

(56) Entgegenhaltungen:
- WO-A-97/40383
- WO-A-98/08092
- WO-A-99/59722
- GB-A- 2 336 908
- US-A- 4 101 284
- US-A- 4 510 119

## Beschreibung

Die Erfindung betrifft eine Probensortier-, Übergabe- und Aufnahmevorrichtung für Mikroperlen, die als Festphasenträger für Synthese- oder Analysenzwecke dienen, welche insbesondere im automatisierten Laborbetrieb im Bereich der kombinatorischen Chemie und molekularen Biotechnologie zum Einsatz gelangt. Weiterhin betrifft die Erfindung ein Verfahren zum Betrieb einer solchen Vorrichtung.

Seit längerem sind Reaktionsgefaße bekannt, bei denen Probenpartikel in Form von Perlen für die Separation und Synthese im labortechnischen Bereich eingesetzt werden. Bei den zum Einsatz gelangenden Perlen handelt es sich um Glas- oder Polymerkügelchen, welche Durchmesser von 1 µm bis 1 mm aufweisen, die als loses Schüttgut in ein Reaktionsgefäß gefüllt und dann mit Flüssigkeit umspült werden, wobei zwischen der Festphasenoberfläche der Perlen und der sie umgebenden Flüssigkeit ein Adsorptions- oder Reaktionsprozeß abläuft (vgl. z.B. US-PS 5,437,979). Verfahren der Säulenchromatographie, z.B. Gelfiltration, der Säulenextraktion, der Immundiagnostik, der Biomolekülreinigung, z.B. DNA-Reinigung, sowie der homogenen und heterogenen Synthese, z.B. von Oligonukleotiden, Peptiden oder kombinatorischen Substanzbibliotheken, nutzen diese Technik aus.

Aufgrund der in der Regel teuren Ausgangssubstanzen und deren nicht beliebigen Verfügbarkeit in großen Mengen, geht der Trend seit jüngster Zeit hin zu einer Miniaturisierung der Labortechniken. So existieren z.B. Mikro- und Nanotiterplatten, die über eine Vielzahl geordnet verteilter, einzelner Probenkammern verfügen, deren Einzelkammervolumen noch in einer praktikablen Größenordnung von 20 nl festlegbar ist. Die Abmessungen der Probenkammern dieser Probenträger richten sich dabei nach den mit handelsüblichen Pipettiervorrichtungen verläßlich dosierbaren Volumina und unterliegen mit dem Fortschreiten der Dosiertechnologie einer kontinuierlichen Miniaturisierung. In WO95/01559 ist ein Beispiel für einen solchen Probenträger beschrieben, bei dem pro Probenkammer eine der genannten Mikroperlen einzubringen ist. Der Prozeß der Bestückung dieser Kammern von Hand ist in einem vertretbaren Zeitaufwand praktisch im großtechnischen Maßstab nicht mehr realisierbar. Werden Mikroperlen eingesetzt, wie z.B. solche aus Polystyrol, treten zusätzliche Probleme durch deren elektrosttatische Aufladbarkeit auf. Zur Bestückung der Probenkammern mit genannten Mikroperlen und zu deren Entnahme nach abgelaufenen Reaktionsprozessen sind aufwendige miniaturisierte Automaten erforderlich. Ein besonderes Problem, insbesondere bei reaktionskinetisch sensiblen Umsetzungen und exakt einzuhaltenden Reaktionszeiten, bereitet die gleichzeitige Entnahme aller oder einer vorgegebenen Anzahl definiert ausgewählter Mikroperlen zu einem vorgegebenen Zeitpunkt. Dies ist mit den bekannten Technologien und Vorrichtungen nahezu ausgeschlossen. Um wenigstens einen exakten Reaktionsabbruch zu bewerkstelligen, ist dazu in z.B. WO 95/01559 vorgeschlagen worden, die Böden der einzelnen Reaktionskammern als Siebböden auszubilden, durch die die Reaktionsflüssigkeit definiert abgesaugt werden kann.

Weiterhin ist aus WO 97/40383 A1 eine Vorrichtung und ein Verfahren zur Handhabung von Mikroperlen bekannt, die eine Platte mit Bohrungen enthält, wodurch bei Anlegen eines Unterdrucks die Mikroperlen in den jeweiligen Aufnahmen festgehalten werden können. Die Verteilung der Mikroperlen, erfolgt über eine korrespondierende Mehrlochplatte, wobei die Mikroperlen aus einer Lösung vermittels Anlegen eines Unterdurcks an die aufnehmenden Greifer erfaßt werden. Ein sich selbst organisierendes Einbringen von Mikroperlen und ein gleichzeitig gesichertes Besetzen aller Mikroperlenaufnahmebereiche ist bei diesem Vorschlag jedoch nicht gewährleistet.

In WO 98/08092 A1 ist ein weiteres Verfahren und eine Vorrichtung zur Verteilung und Überführung von einzelnen Mikroperlen in eine Mehrlochplatte durch Verwendung eines mit Klebstoff beschichteten Films beschrieben.

GB 2 336 908 A offenbart ebenfalls eine Probensortiervorrichtung für kleine Mikroperlen, die einen ersten Modul mit Mikroperlenunterauniahmebereichen beinhaltet, die mit den geometrischen Gegebenheiten eines aufsetzbaren Probenaufnabmeträgers korrespondieren, wobei jeder Mikroperlenunteraufnahmebereich eine Ausnehmung zur bündigen Aufnahme einer Mikroperle aufweist, wobei die Mikroperlen durch Anlegen eines Unterdrucks gehalten werden. Auch bei diesem Vorschlag erfolgt die Aufnahme von Mikroperlen aus einer Lösung und das Umsetzen in korrespondierende Aufnahmebereiche erfolgt durch Anlegen eines Unter- respektive eines Überdrucks.

Schließlich beschreibt WO 99/59722 A1 eine Probensortiervorrichtung für kleine Mikroperlen, die ähnlich, technisch jedoch noch aufwendiger, zur vorstehend zitierten Lösung WO 97/40383 A1 ausgebildet ist, und bei der ebenfalls durch Anlegen eines Unterdrucks an entsprechende Greifmodule jeweils die Aufnahme einer Mikroperle und deren Umsetzung in einen korrespondierend ausgebildeten Probenaufnahmeträger erfolgt. Die dort beschriebenen Probenaufnahmeträger können übereinander angeordnet und mit verschiedenen Substanzen beaufschlagt werden. Um nach diesem Vorschlag eine definierte Beladung mit Mikroperlen zu gewährleisten, ist in jedem Fall eine korrespondierende Vorlage erforderlich, die die Mikroperlen in geordneter Weise trägt.

Der Erfindung liegt die Aufgabe zugrunde, eine Probensortier-, Übergabe- und Ubemahmevorrichtung für kleine Mikroperlen und ein Verfahren zu deren Betrieb anzugeben, die anpaßbar an verfügbare Probenaufnahmevorrichtungen, wie Mikro- und Nanotiterplatten, die gleichzeitige Bestückung jeder einzelnen Probenkammer mit nur einer Mikroperle als auch deren gezielte Entnahme ermöglicht Dabei soll die Vorrichtung so ausgeführt sein, daß sie robotorischen Einheiten zugänglich ist.

Die Aufgabe wird durch die kennzeichnenden Merkmale der Patentansprüche 1 und 16 gelöst. Vorteilhafte weitere Ausgestaltungen sind durch die jeweils nachgeordneten Ansprüche erfaßt

Die Erfindung soll nachstehend anhand schematischer Ausführungsbeispiele näher erläutert werden. Es zeigen:
- Fig. 1a: ein erstes Modul in Draufsicht,
- Fig. 1b: das Modul nach Fig. 1a in einem Schnitt entlang einer Ebene C-C,
- Fig. 1c: das Modul nach den Figuren 1a und 1b in perspektivischer Ansicht mit einem im Beispiel einlegbaren Mikroperlenaufnahmebereich,
- Fig. 2: einen Ausschnitt einer Ausführungsform des Mikropelenaufnahmebereichs als Teil des ersten Moduls mit einem darüber positionierten Ausschnitt eines Probenaufnahmeträgers als Teil eines zweiten Moduls,
- Fig.: 3 einen Ausschnitt einer zweiten Ausführungsform des Mikroperlenaufnahmebereichs als Teil des ersten Moduls,
- Fig. 4: einen ersten Modul mit eingelegtem Mikroperlenaufnahmebereich mit einer transparent dargestellten aufgesetzten Kammer, die die in den Mikroperlenaufnahmebereich einzubringenden Mikroperlen enthält, in perspektivischer Ansicht und
- Fig. 5: eine Ausführungsmöglichkeit einer Zuführung eines zweiten Moduls, der einen Probenaufnahmeträger beinhaltet.

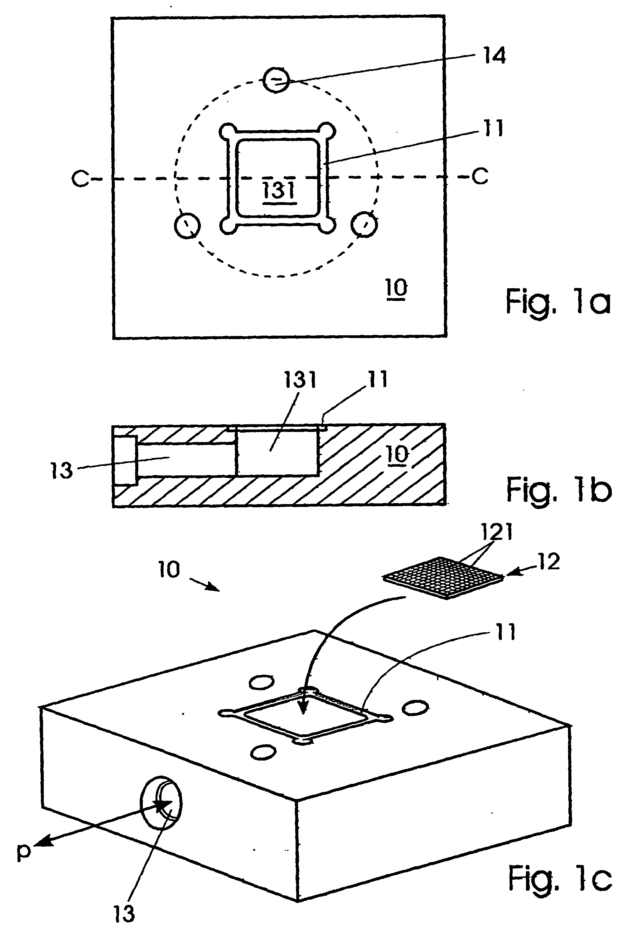

Figur 1a zeigt eine Ausführungsmöglichkeit eines ersten Moduls 10 in Draufsicht. In diesen Modul 10 ist im Beispiel ein als Aufnahme 11 dienende Ausnehmung 11 eingebracht unterhalb derer eine Kammer 131 vorgesehen ist, die mit wenigstens einem aus dem Modul 10 herausgeführten Kanal 13 verbunden ist, wie es aus Figur 1b ersichtlich ist, die eine Schnittdarstellung entlang einer Ebene nach Fig. 1a zeigt. In genannte Aufnahme 11 ist ein Mikroperlenaufnahmebereich 12, dessen Ausbildung, insbesondere die Ausbildung von in Fig. 1c nur schematisch skizzierten Mikroperlenaufnahmeunterbereichen 121 zu den nachfolgenden Figuren näher beschrieben wird, so einlegbar, daß dessen Oberfläche mit der Oberfläche des Moduls 10 plan abschließt. Es liegt im Rahmen der Erfindung, daß der Mikroperlenaufnahmebereich 12 ein einstückiges Bestandteil des Moduls 10 ist, wobei dann lediglich eine nicht dargestellte Trennung des Moduls 10 vorzusehen wäre, um die erforderliche Kammer 131 und den Kanal 13 einbringen zu können. Der nach außen geführte Kanal 13 ist an nicht näher dargestellte weitere Einrichtungen anschließbar, die eine wahlweise Beaufschlagung der Kammer 131 mit einem Unter- oder Überdruck eines gasförmigen oder fluidischen Mediums ermöglichen.

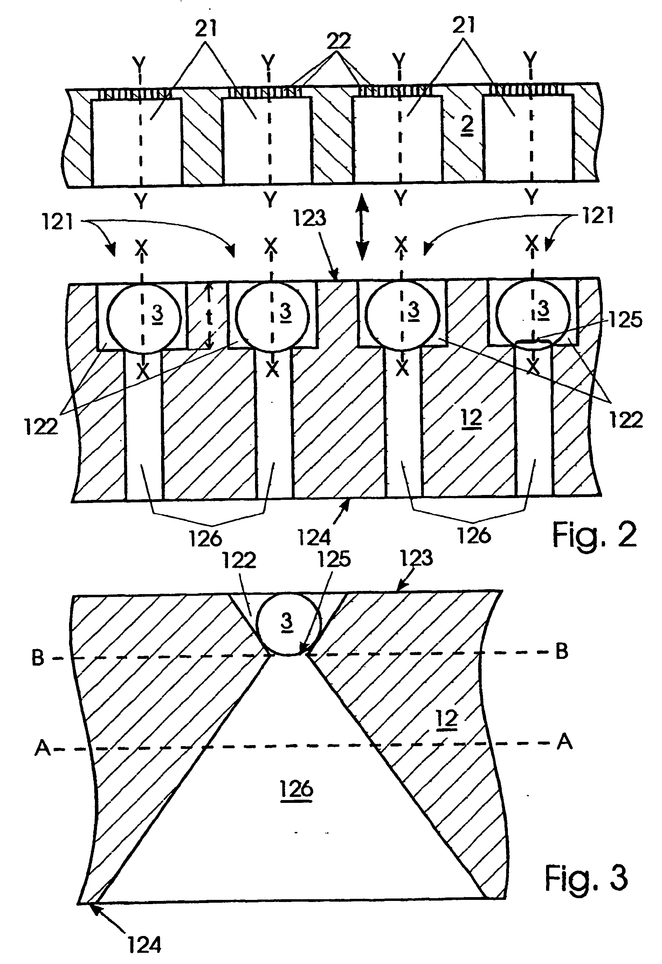

In Figur 2 ist ein Ausschnitt einer Ausführungsform des Mikroperlenaufnahmebereichs 12 als Teil des ersten Moduls 10 mit einem darüber positionierten Ausschnitt eines Probenaufnahmeträgers 2 als Teil eines zweiten, in Fig. 2 nicht näher dargestellten Moduls in einem Längsschnitt dargestellt. Im unteren Teil der Fig. 2 ist dabei der Mikroperlenaufnahmebereich 12 durch eine dünne Platte gebildet, die mit mehreren Mikroperlenaufnahmeunterbereichen 121 versehen ist, welche durch mehrere Ausnehmungen 122 zur Aufnahme jeweils einer Mikroperle 3 gebildet ist. Die Tiefe t der Ausnehmungen 122 ist dabei so festgelegt, daß die Mikroperlen 3 im eingelegten Zustand mit einer ersten Oberfläche 123 des Mikroperlenaufnahmebereichs 12 im wesentlichen bündig abschließen. Weiterhin weisen die Ausnehmungen 122 in ihrem Bodenbereich jeweils eine Öffnung 125 auf, an die sich in Richtung zur zweiten Oberfläche 124 des Mikroperlenaufnahmebereichs 12 erstreckende Durchbrüche 126, im Beispiel als Laserbohrungen ausgeführt, anschließen. Im Beispiel stehen genannte Durchbrüche 126 mit der in Fig. 2 nicht dargestellten Kammer 131 in Verbindung. Ebenso liegt es im Rahmen der Erfindung, was insbesondere bei deren Verwendung als Probenübernahmevorrichtung vorteilhaft zum tragen kommt, an die Durchbrüche 126 jeweils gesonderte, mit einem Unter- oder Überdruck beaufschlagbare Kanäle anzuschließen. Im Ausführungsbeispiel nach Figur 2 sind, ohne die Erfindung darauf zu beschränken, sowohl die Ausnehmungen 122 als auch die Durchbrüche 126 im wesentlichen zylindrisch ausgeführt, wobei im Bereich der Öffnung 125 eine Verjüngung gebildet ist.
Die Anordnung der Mikroperlenaufnahmeunterbereiche 121 ist durch den zum Einsatz gelangenden Probenaufnahmeträger 2 vorbestimmt und dabei so gewählt, daß in Abhängigkeit von den geometrischen Gegebenheiten eines entsprechend des dargestellten Doppelpfeils aufsetz- und abnehmbaren Prabenaufnahmeträgers 2 bezüglich der Anzahl, Lage und Ausdehnung einzelner in ihm befindlicher Probenkammern 21, die jeweiligen Mittenachsen X-X der Ausnehmungen 122 mit den Mittenachsen Y-Y der gegenüberliegenden zu beschickenden oder zu entleerenden einzelnen Probenkammern 21 des Probenaufnahmeträgers 2 korrespondieren. Im Rahmen der Erfindung ist es deshalb vorteilhaft den Mikroperlenaufnahmebereich 12 als eine auswechselbare Platte auszubilden, so daß eine Anpassung an unterschiedlich ausgebildete Probenaufnahmeträger 2 und unterschiedliche Mikroperlendurchmesser problemlos möglich ist

Eine besonders vorteilhafte Ausbildung eines Mikroperlenaufnahmebereichs 12 ist in einem Ausschnitt in Figur 3 skizziert. Hier ist der Mikroperlenaufnahmebereich 12 durch ein Siliziumchip gebildet, in den mittels bekannter mikrosystemtechnischer Strukturierungsverfahren die Ausnehmungen 122 und Durchbrüche 126 eingebracht worden sind. Im Beispiel gelangte zur Chipherstellung dabei ein 100 orientiertes Si-Wafer zum Einsatz, wodurch sich mehrere identische oder unterschiedliche Chips in einem Herstellungsprozeß aus einem Wafer herstellen lassen. Die vorgegebenen kristallografischen Ebenen des Siliziums bedingen dabei, daß die Ausnehmungen 122 und die Durchbrüche 126 im Ätzprozeß automatisch eine konische Wandform annehmen, was insbesondere für die Ausnehmungen 122 von Vorteil ist, da dadurch die Mikroperlen 3 leichter aufnehmbar sind. Der Chip (Mikroperlenaufnahmebereich 12) weist im Beispiel Außenabmessungen von 12 mm · 12 mm bei einer Chipdicke von 490 µm auf. Je nach gewähltem Durchmesser der Mikroperlen 3, die gängig bei 94µm, 100µm, 109µm oder 120µm liegen, lasen sich bei den angegebenen Waferdicken und Chipbemessungen auf einem 4"-Wafer (Durchmesser ≈101,60 mm) bis zu 25000 Ausnehmungen 122 auf dem Chip (Mikroperlenaufnahmebereich 12) unterbingen.
Die assymmetrische Einbringung der Ausnehmungen 122 und der Durchbrüche 126, bezogen auf die Mittenebene A-A, erfolgt dabei derart, daß die von ihnen beidseits erfaßte Ebene B-B, in der die Öffnungen 125 zu liegen kommen, so positioniert ist, daß die eingebrachten Mikroperlen 3 wiederum im wesentlichen bündig mit der ersten Oberfläche 123 des Chips (Mikroperlenaufnahmebereich 12) abschließen. In jedem Fall, auch im Beispiel nach Fig. 2, ist der mittlere Durchmesser der Öffnungen 125 so festzulegen, daß die Mikroperlen 3 nicht in einen klemmenden Eingriff mit den Berandungen der Öffnungen 125 geraten können.

Es liegt weiterhin im Rahmen der Erfindung, für den einleg- und arretierbaren Mikroperlenaufnahmebereich auch andere Materialien, wie z.B. photostrukturierbares Glas, einzusetzen, wodurch die Variabilität der geometrischen Ausbildung der Ausnehmungen 122 und der Durchbrüche 126 vergrößerbar ist. Ebenso kann für den Probenaumahmeträger 2 eine magnetisierbare Platte, in die die Probenkammern 21 zur Aufnahme jeweils einer magnetisierbaren Mikroperle 3 eingearbeitet , sind zum Einsatz gelangen.

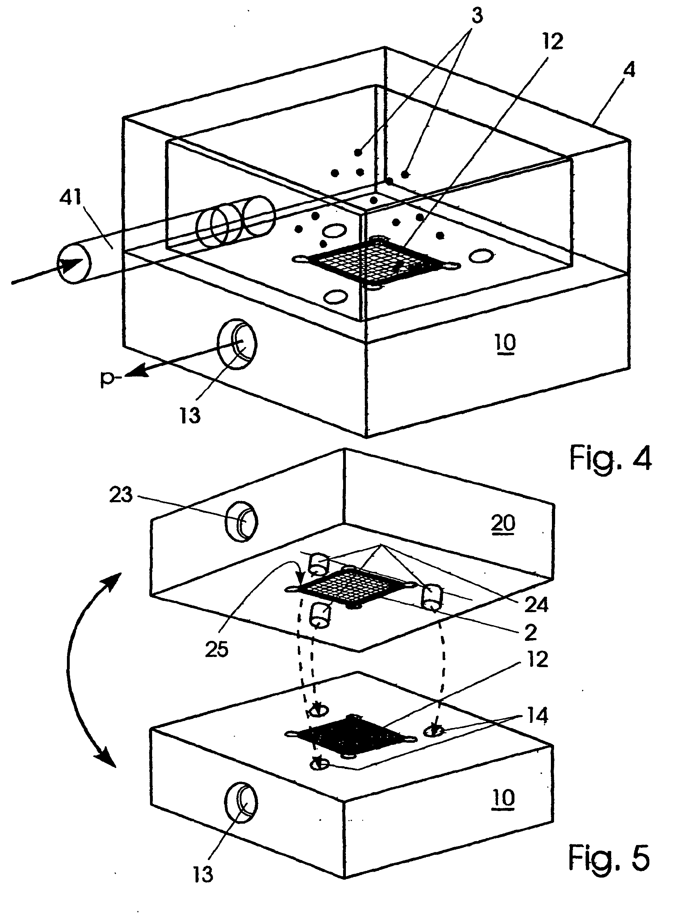

Eine vorteilhafte Beschickungsmöglichkeit der Ausnehmungen 122 mit Mikroperlen 3 ist in Figur 4 dargestellt. Fig. 4 zeigt den ersten Modul 10 mit einem eingelegten Mikroperlenaumahmebereich 12, der entsprechend der Ausbildungen nach den Figuren 2 oder 3 ausgebildet ist. Auf diesen Modul 10 ist eine Kammer 4, die die Mikroperlen 3 enthält, dichtend aufsetzbar. Im Beispiel ist diese Kammer 4 als eine mit einem Anschluß 41 versehene Verwirbelungskammer ausgebildet, in die die Mikroperlen 3 eingeblasen und einer permanenten Bewegung unterworfen werden. Eine solche Ausbildung ist besonders dann vorteilhaft, wenn bspw. elektrostatisch aufladbare Mikroperlen 3, z.B. solche aus Polystyrol, eingesetzt werden, um deren Aneinanderklumpung zu unterdrücken. Gleichzeitig mit dem Einblasen der Mikroperlen 3 ist an den Kanal 13 ein Unterdruck angelegt, dargestellt durch einen Pfeil p-, wodurch über die Kammer 131 ein Sog durch die einzelnen Ausnehmungen 122 auf die in der Kammer 4 in der Nähe des Mikroperlenaufnahmebereichs 12 befindlichen Mikroperlen 3 ausgeübt wird und sehr schnell alle Ausnehmungen 122 mit jeweils einer Mikroperle besetzt werden. Zur Vorkonfektionierung mehrere Mikroperlenaufnahmebereiche 12 kann zum einen der Modul 10 mit mehreren, nicht dargestellten Aufnahmen 11 für genannte Chips (Mikroperlenaufnahmebereich 12) versehen sein, oder an dieser Stelle die Kammer 4 abgenommen, die überschüssigen Mikroperlen 3 beseitigt und der erste bestückte Mikroperlenaufnahmebereich 12 entnommen werden, wenn er, wie oben beschrieben, entsprechend lösbar ausgebildet wurde und gegen einen unbestückten Mikroperlenaufnahmebereich ersetzt werden.

Figur 5 geht im unteren Teil zunächst von einem vollständig bestückten Mikroperlenaufnahmebereich 12 aus, der, vorzugsweise bei am Kanal 13 anliegendem Unterdruck, einem Probenaufnahmeträger 2 zuführbar ist. Im Beispiel nach Fig. 5 ist der Probenaufnahmeträger 2, wie z.B. eine Mikro- oder Nanotiterplatte, in einer Aufnahme 25 eines zweiten Moduls 20 einsetz- und arretierbar eingelegt. Fig. 5 zeigt dabei in perspektivischer Darstellung beide Module 10 und 20 im noch nicht zusammengeführten Zustand. Das Modul 20 kann dabei analog zum Modul 10 ausgebildet sein, muß es jedoch nicht zwingend. Notwendig ist lediglich, daß gewährleistet ist, daß die Probenkammern 21 des Probenaufnahmeträgers 2 im aufeinandergelegten Zustand deckungsgleich zu den jeweiligen Ausnehmungen 122 bzgl. ihrer jeweiligen Mittenachsen zu liegen kommen. Dies wird vorteilhaft dadurch realisiert, daß das erste Modul 10 und das zweite Modul 20 mit Mitteln, wie vorzugsweise Stiften 24 und dazu komplementär ausgebildeten und im jeweiligen anderen Modul angeordneten, die Stifte 24 aufnehmenden Öffnungen 14, versehen sind, die ein exaktes und unverwechselbares Positionieren der Module 10, 20 zueinander gewährleisten. Die exakte Ausrichtung des Mikroperlenaufnahmebereichs 12 und des Probenaufnahmeträgers 2 innerhalb der jeweiligen Aufnahmen ist dabei durch nicht näher dargestellte Justier- und Arretiermittel von vornherein zu gewährleisten. Im folgenden wird das Modul 20 auf den Modul 10 aufgesetzt, wobei folgende unterschiedliche Vorgehensweisen möglich sind:
Im ersten Fall soll von einem Probenaufnahmeträger mit nur einseitig geöffneten Probenkammern 21 ausgegangen werden. Dabei wird das Modul 20 so auf den Modul 10 aufgesetzt, daß zwischen der ersten Oberfläche 123 des Mikroperlenaufnahmebereichs 12 und der dieser gegenüberliegenden Oberfläche des Probenaufnhameträgers 2 ein Spalt verbleibt, der kleiner ist als der Durchmesser der eingesetzten Mikroperlen 3. Die zusammengesetzten Module 10 und 20 werden anschließend um 180° entsprechend des in Fig. 5 dargestellten gekrümmten Doppelpfeils so gedreht, daß der Modul 10 oberhalb des Moduls 20 zu liegen kommt Die gleichzeitige Übergabe der Mikroperlen 3 in die Probenkammern 21 des Probenträgers 2 erfolgt dann durch Abschalten des anliegenden Unterdrucks am Kanal 13 und einer entsprechenden Druckbeaufschlagung. Auch ist es in diesem Fall möglich, die Mikroperlen 3 aus ihren Ausnehmungen 122 vermittels eines flüssigen, durch den Kanal 13 zugeführten Mediums auszuspülen. In einem zweiten, für weiter nachstehend beschriebene Einsatzfälle, besonders vorteilhaften Fall wird von einem speziell ausgebildeten Probenaufnahmeträger 2 ausgegangen, der etwas detaillierter im oberen Teil von Fig. 2 angedeutet ist. Hier sollen die Probenkammern 21 des Probenaufnahmeträgers 2 in ihrem Kammerbodenbereich mit Durchlässen 22 versehen sein. Die Durchlässe 22 können dabei durch eine Fritte gebildet sein, die gas- und flüssigkeitsdurchlässige Poren in der Größenordnung von 1 µm bis 10 µm auiweist. Eine besonders vorteilhafte Ausführungsform ist jedoch, auch ein aus einem Siliziumchip gefertigter Probenaufnahmeträger 2, in dem die Durchlässe 22 durch siebartig eingeätzte und regelmäßig verteilte Öffnungen in der Größenordnung von 10 µm gebildet sind, wie in Fig. 2 angedeutet. In diesem Fall kann auch der Probenträger 2, analog zu den Ausführungen zum Modul 10, über einen Kanal 23 mit einem Unter- oder Überdruck beaufschlagt werden, wodurch die Übergabe der Mikroperlen 3 weitergehend vereinfacht wird. Weitere sich daraus ergebende Vorteile sind weiter unten beschrieben. Bei einer solchen Ausbildung des Probenträgers können zum einen die Module 10 und 20 so aufeinandergesetzt werden, daß die erste Oberfläche 123 des Mikroperlenaufnahmebereichs 12 die ihr gegenüberliegende Oberfläche des Probenaufnahmeträgers 2 kontaktierend berührt, also ohne Vorsehung zum ersten Fall genannten Spalts. Je nach den vorliegenden Gegebenheiten kann dabei genannte Drehung um 180° bei der Übergabe der Mikroperlen 3 entfallen.

Weiterhin bedingt eine Ausführungsform des Probenträgers nach dem zweiten beschrieben Fall, daß durch Absaugung von Reaktionsflüssigkeit durch die Durchlässe in den Bodenbereichen der an den Oberflächen der Mikroperlen ablaufende Reaktionsprozeß gleichzeitig und vorbestimmt für alle Mikroperlen beendet werden kann. Weist der Modul 10, wie weiter oben bereits ausgeführt, separat mit einem Unterdruck beaufschlagbare, jeweils nur einen Durchbruch 126 erfassende gesonderte Kanäle auf, kann der Modul 10 zugleich zu einer vorbestinumbaren Entnahme nur einzelner Mikroperlen 3 oder Gruppen von beliebig verteilten Mikroperlen 3, die nach der Übergabe der Mikroperlen 3 in den Probenträger 2 eine anschließende unterschiedliche Behandlung erfahren haben können, durch Wiederaufsetzen des Moduls 10 auf den Modul 20 eingesetzt werden.

Vorliegende Erfindung erlaubt einen hochparallelen und selektiven Übertrag und die Entnahme von kleinen Festphasenträgern in beliebig ausgeführten Mikro- oder Nanotiterplatten. Die Mikroperten (Synthesebeads) sind mit Hilfe der vorgeschlagenen Vorrichtung hochparallel vereinzelbar und in die Nanotiterplatten, die vorzugsweise mit Mikrosiebböden ausgestattet sein können, übertragbar. An den vereinzelten Beads wird entsprechend eines Syntheseprotokolls eine Substanz gekoppelt. Geht man beispielhaft von 6000 Kammern aus, die mit 6000 Beads zu versehen sind, ist ein solches Wafer in ca. 30 min mit den vorgesehenen Beads bestückt, d.h. in 10h lassen sich so Synthesewafer mit insgesamt 120000 Synthesebeads vorbereiten. Die vorgesehenen Synthesen lassen sich nun bspw. nach dem in WO 95/01559 vorgesehenen Verfahren durchführen. Es kann nach Waschen, Einbringen der Targetsubstanz in Lösung und nach Fotoabspaltung der synthetisierten Bibliotheks-Substanzen ein Bioassay durchgeführt werden, das ebenso eine softwaregestützte Auswertung und Optimierung ermöglicht. Ein anderer Weg besteht in der Entnahme der Synthesekugeln für weitere Analysenprozesse mit Hilfe der Sortiervorrichtung bzw. der Übertrag in entsprechende Analysengefäße.
Ebenso erlaubt die erfindungsgemäße Vorrichtung auch die Prozessierung von Beads, an denen bspw. nach dem Split und Pool Verfahren Vorsynthesen oder Synthesen durchgeführt worden sind.
Die Erfindung ermöglicht, im Gegensatz zu den bekannten Verfahren, eine Bereitstellung bzw. Synthese einer großen Anzahl, je nach vorgelegter Nanotiterplatte derzeit bis zu 25000 diverser Moleküle in Ausbeuten, die sowohl einer standardisierten Laboranalytik zugänglich sind als auch durch die Reproduzierbarkeit des Verfahrens eine eindeutige Synthese der jeweiligen Substanz zuläßt.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 10 -: erstes Modul
- 11 -: Aufnahme des ersten Moduls
- 12 -: Mikroperlenaufnahmebereich
- 121 -: Mikroperlenaufnahmeunterbereiche
- 122 -: Ausnehmungen im Mikcoperlenaufnahmebereich
- 123 -: erste Oberfläche des Mikroperlenaufnahmebereichs
- 124 -: zweite Oberfläche des Mikroperlenaufnahmebereichs
- 125 -: Öffnung im Bodenbereich der Ausnehmung 122
- 126 -: Durchbruch zwischen der Öffnung 125 und der Oberfläche 124
- 13 -: ein oder mehrere Kanäle im ersten Modul
- 131 -: Kammer
- 14 -: Öffnungen zur Aufnahme von Stiften
- 2 -: Probenaufnahmeträger
- 20 -: zweites Modul
- 21 -: Probenkammern
- 22 -: Durchlässe im Bodenbereich der Probenkammern 21
- 23 -: Kanal im zweiten Modul
- 24 -: Stift
- 25 -: Aufnahme des zweiten Moduls
- 3 -: Mikroperle
- 4 -: (Verwirbelungs)kammer
- 41 -: Anschluß an (Verwirbelungs)kammer
- A-A -: Mittenebene A-A des Mikroperlenaufnahmebereichs 12
- B-B -: Ebene der Öffnungen 125
- C-C -: Schnittebene
- p, p- -: Druckrichtungspfeile
- X-X -: Mittenachsen
- Y-Y -: Mittenachsen

## Patentansprüche

1. Probensortier-, Übergabe- und Übernahmevorrichtung für Mikroperlen (3), die als Festphasenträger für Synthese- oder Analysenzwecke dienen, wobei die Vorrichtung ein erstes Modul (10) aufweist, das wenigstens einen Mikroperlenaufnahmebereich (12) mit einer ersten Oberfläche (123) und einer zweiten Oberfläche (124) beinhaltet, der in Abhängigkeit von den geometrischen Gegebenheiten eines aufsetzbaren Probenaufnahmeträgers (2) bezüglich der Anzahl, Lage und Ausdehnung einzelner in ihm befindlicher Probenkammern (21), mehrere Mikroperlenaufnahmeunterbereiche (121) enthält, deren Mittenachsen (X-X) mit den Mittenachsen (Y-Y) der zu beschickenden oder zu entleerenden einzelnen Probenkammern (21) des Probenaufnahmeträgers (2) korrespondieren, wobei jeder der Mikroperlenaufnahmeunterbereiche (121) eine Ausnehmung (122) zur Aufnahme nur einer Mikroperle (3) aufweist, der in ihrem Bodenbereich eine Öffnung (125) gegeben ist, deren Durchmesser kleiner als der Durchmesser der Mikroperle (3) ist und an die ein sich jeweils in Richtung zur zweiten Oberfläche (124) des Mikroperlenaufnahmebereichs (12) sich erstreckender Durchbruch (126) anschließt und die Durchbrüche (126) über einen oder mehrere Kanäle (13) und/oder eine Kammer (131) mit einem Unter- oder Überdruck beaufschlagbar sind, **dadurch gekennzeichnet, dass** der Ausnehmung (122) eine solche Tiefe (t) gegeben ist, dass die in sie eingebrachte Mikroperle (3) im wesentlichen bündig mit einer ersten Oberfläche (123) des Mikroperlenaufnahmebereichs (12) abschließt

2. Probensortier-, Übergabe- und Übernahmevorrichtung nach Anspruch 1, **dadurch gekennzeichnet, dass** das erste Modul (10) mit wenigstens einer Aufnahme (11) versehen ist, in die ein strukturierter Chip, welcher den Mikroperlenaufnahmebereich (12) bildet, auswechsel- und arretierbar eingelegt ist.

3. Probensortier-, Übergabe- und Übernahmevorrichtung nach Anspruch 1 oder 2, **dadurch gekennzeichnet, daß** die Ausnehmungen (122) im Mikroperlenaufnahmebereich (12) im wesentlichen zylindrisch eingebracht sind.

4. Probensortier-, Übergabe- und Übernahmevorrichtung nach Anspruch 1 oder 2, **dadurch gekennzeichnet, daß** die Ausnehmungen (122) im Mikroperlenaufnahmebereich (12) im wesentlichen konisch und sich in Richtung der Öffnung (125) verjüngend eingebracht sind.

5. Probensortier-, Übergabe- und Übernahmevorrichtung nach Anspruch 1 oder 2, **dadurch gekennzeichnet, daß** die Durchbrüche (126) im Mikroperlenaufnahmebereich (12) im wesentlichen zylindrisch eingebracht sind.

6. Probensortier-, Übergabe- und Übernahmevorrichtung nach Anspruch 1 oder 2, **dadurch gekennzeichnet, daß** die Durchbrüche (126) im Mikroperlenaufnahmebereich (12) im wesentlichen konisch und sich in Richtung der Öffnung (125) verjüngend eingebracht sind.

7. Probensortier-, Übergabe- und Übernahmevorrichtung nach Anspruch 1, 2, 4 und 6, **dadurch gekennzeichnet, daß** der Mikroperlenaufnahmebereich (12) durch ein Siliziumchip gebildet ist.

8. Probensortier-, Übergabe- und Übernahmevorrichtung nach Anspruch 1, 2, 4, 6 und 7, **dadurch gekennzeichnet, daß** die konischen Ausnehmungen (122) und Durchbrüche (126), derart eingebracht sind, daß die von ihnen beidseits erfaßte Ebene (B-B), in der die Öffnungen (125) vorgesehen sind, bezogen auf die Mittenebene (A-A) des Mikroperlenaufnahmebereichs (12), asymmetrisch in Richtung der ersten Oberfläche (123) angeordnet ist.

9. Probensorder-, Übergabe- und Übernahmevorrichtung nach Anspruch 1, **dadurch gekennzeichnet, daß** auf das Modul (10), das wenigstens einen Mikroperlenaufnahmebereich (12) beinhaltet, zur Befüllung der Ausnehmungen (122) mit jeweils einer Mikroperle (3), eine Kammer (4), insbesondere eine Verwirbelungskammer, in die genannte Mikroperlen einbringbar sind, aufsetzbar ist, wobei an den wenigstens einen Kanal (13) und die mit diesem in Verbindung stehende und den Mikroperlenaufnahmebereich (12) erfassende Kammer (131) ein Unterdruck angelegt ist.

10. Probensortier-, Übergabe- und Übernahmevorrichtung nach Anspruch 1, **dadurch gekennzeichnet, daß** der Probenaufnahmeträger (2) gebildet ist durch eine Mikro- oder Nanotiterplatte, die Probenkammern (21) zur Aufnahme jeweils einer Mikroperle (3) beinhaltet, welche in einer Aufnahme (25) eines zweiten Moduls (20) einsetz- und arretierbar ist.

11. Probensortier-, Übergabe- und Übernahmevorrichtung nach Anspruch 1, **dadurch gekennzeichnet, daß** der Probenaufnahmeträger (2) gebildet ist durch eine magnetisierbare Platte, die Probenkammern (21) zur Aufnahme jeweils einer magnetisierbaren Mikroperle (3) beinhaltet, welche in einer Aufnahme (25) eines zweiten Moduls (20) einsetz- und arretierbar ist.

12. Probensortier-, Übergabe- und Übernahmevorrichtung nach Anspruch 1 und 10 oder 11, **dadurch gekennzeichnet, daß** das erste Modul (10) und das zweite Modul (20) mit Mitteln, wie vorzugsweise Stiften (24) und dazu komplementär ausgebildeten und im jeweiligen anderen Modul angeordneten, die Stifte (24) aufnehmenden Öffnungen (14), versehen sind, die ein exaktes und unverwechselbares Positionieren der Module (10; 20) zueinander gewährleisten.

13. Probensortier-, Übergabe- und Übernahmevorrichtung nach Anspruch 1 und 10 oder 11, **dadurch gekennzeichnet, daß** die Probenkammern (21) des Probenaufnahmeträgers (2) in ihrem Kammerbodenbereich mit Durchlässen (22) versehen sind.

14. Probensortier-, Übergabe- und Übernahmevorrichtung nach Anspruch 13, **dadurch gekennzeichnet, daß** die Durchlässe (22) durch eine Fritte gebildet sind, die gas- und flüssigkeitsdurchlässige Poren in der Größenordnung von 10 µm aufweist.

15. Probensortier-, Übergabe- und Übernahmevorrichtung nach Anspruch 13, **dadurch gekennzeichnet, daß** der Probenaufnahmeträger (2) aus einem Siliziumchip gefertigt ist und die Durchlässe (22) durch siebartig eingeätzte und regelmäßig verteilte Öffnungen die in der Größenordnung von 10 µm gebildet sind.

16. Probensortier-, Übergabe- und Übernahmevorrichtung nach Anspruch 1 und 10 oder 11, **dadurch gekennzeichnet, daß** der Probenaufnahmeträger (2) über einen oder mehrere Kanäle (23) und eine damit in Verbindung stehende Kammer (131) des Moduls (20) mit einem Unter- oder Überdruck beaufschlagbar ist.

17. Verfahren zum Betreiben einer Probensortier-, Übergabe- und Übernahmevorrichtung für kleine Mikroperlen, die als Festphasenträger für Synthese- oder Analysenzwecke dienen, nach einem der vorstehenden Ansprüche, **dadurch gekennzeichnet, daß** ein erstes Modul (10) vorgesehen wird, das einen Mikroperlenaufnahmebereich (12) mit mehreren Mikroperlenaufnahmeunterbereichen (121) zur Aufnahme jeweils einer Mikroperle (3) aufweist, auf dieses erste Modul (10) eine Mikroperlen (3) beinhaltende Kammer (4) aufgesetzt wird, die Mikroperlen (3) einer permanenten Bewegung unterworfen werden, wobei die Mikroperlenaufnahmeunterbereiche (121) über Öffnungen (125) mit einem Unterdruck zumindest solange beaufschlagt werden, bis jede Ausnehmung (122) von einer Mikroperle (3) besetzt wird, danach die Kammer (4) und die überschüssigen Mikroperlen (3) entfernt werden, bei vorzugsweise weiterhin am ersten Modul (10) anliegendem Unterdruck ein Probenäufnähmeträger (2) mit darin befindlichen Probenkammern (21), deren Anzahl, Lage und Ausdehnung den Mikroperlenaufuahmeunterbereichen (121) im wesentlichen entspricht, mit den jeweiligen Öffnungseiten auf den Mikroperlenaufnahmebereich (12) aufgesetzt wird und anschließend das erste Modul (10) mit einem Überdruck oder Normaldruck und die Probenkammern (21) des Probenaufnahmeträgers (2) mit einem Normaldruck oder einem Unterdruck beaufschlagt werden, wobei die Mikroperlen (3) an den Probenaufnahmeträger (2) übergeben werden, woran anschließend der mit Mikroperlen (3) bestückte Probenaufnahmeträger (2) vom Modul (10) entfernt wird.

## Revendications

1. Le dispositif permettant de trier des échantillons, de transférer et de collecter des microperles (3) servant de support dans les phases solides et aux fins de synthèses et d'analyses, dont un premier module (10) est prévu qui comprend au moins une zone pour collecter les microperles (12), zone comprenant une première surface (123) et une deuxième surface (124) configurées en fonction des caractéristiques géométriques d'un porte-échantillons (2) à monter et concernant le nombre, la position et l'extension des différents compartiments d'échantillons se trouvant à l'intérieur (21), et comprenant plusieurs zones à collecter les microperles (121), dont les axes médians (X-X) correspondent aux axes médians (Y-Y) des compartiments (21) à remplir et à vider du porte-échantillons (2), chacune des différentes sous-zones de collecte des microperles (121) comprenant une cavité (122) destinée à recevoir une microperle (3), chacune des cavités présentant en son fond un orifice (125) dont le diamètre est inférieur au diamètre d'une microperle (3), et poursuivi par un passage (126) conduisant vers une deuxième surface (124) de la zone de collection des microperles (12), passages (126) auxquelles peut être appliquée une sur- ou sous-pression et ce à travers un ou plusieurs canaux (13) et/ou un compartiment (131), est **caractérisé en ce que** la cavité (122) a une telle profondeur (t) que la microperle (3), introduite dans la cavité (122), soit positionnée de manière à affleurer pour l'essentiel au raz une première surface (123) de la zone à collecter les microperles (12).

2. Le dispositif permettant de trier des échantillons, de les transférer et collecter selon la revendication 1 est **caractérisé en ce que** le premier module (10) est doté d'au moins une zone de collecte (11), dans laquelle une puce structurée, faisant fonction de zone de réception de microperles (12), est introduite de sorte à permettre de la changer et d'y arrêter.

3. Le dispositif permettant de trier des échantillons, de les transférer et de les collecter selon les revendications 1 ou 2 est **caractérisé en ce que** les cavités (122) dans la zone de réception des microperles (12) adoptent une forme essentiellement cylindrique.

4. Le dispositif permettant de trier des échantillons, de les transférer et collecter selon les revendications 1 ou 2 est **caractérisé en ce que** les cavités (122) dans la zone de réception des microperles (12) sont dotées d'une forme essentiellement conique allant en diminuant en direction de l'orifice (125).

5. Le dispositif permettant de trier des échantillons, de les transférer et collecter selon les revendications 1 ou 2 est **caractérisé en ce que** les passages (126) dans la zone de réception des microperles (12) ont une forme essentiellement cylindrique.

6. Le dispositif permettant de trier des échantillons, de les transférer et collecter selon les revendications 1 ou 2 est **caractérisé en ce que** les passages (126) dans la zone de réception des microperles (12) ont une forme essentiellement conique allant en diminuant en direction de l'orifice (125).

7. Le dispositif permettant de trier des échantillons, de les transférer et collecter selon les revendications 1, 2, 4 et 6 est **caractérisé en ce que** la zone de réception de microperles (12) est formée par une puce de silicium.

8. Le dispositif permettant de trier des échantillons, de les transférer et collecter selon les revendications 1, 2, 4, 6 et 7 est **caractérisé en ce que** les cavités coniques (122) et les passages (126) sont disposés de sorte que le niveau (B-B) déjà saisi par eux sur les deux côtés et comprenant, ensuite, les orifices (125), est configurées en direction de la première surface (123) de manière asymétrique par rapport au niveau médiane (A-A) de la zone de réception des microperles (12).

9. Le dispositif permettant de trier des échantillons, de les transférer et collecter selon la revendication 1 est **caractérisé en ce que** sur le module (10) qui comprend au moins une zone de réception de microperles (12), peut être monté un compartiment (4), de préférence une chambre de tourbillonnement pour remplir chacune des cavités (122) avec une microperle (3) et que sur au moins un canal (13) ainsi que dans la chambre (131) reliée au canal et comprenant la zone de réception des microperles (12) sera appliquée une sous-pression.

10. Le dispositif permettant de trier des échantillons, de les transférer et collecter selon la revendication 1 est **caractérisé en ce que** le porte-échantillons (2) est formé par une micro- ou nanoplaque de titrage comprenant les chambres échantillons (21) lesquelles recevant chacune une microperle (3), et qui peut être placée et bloquée dans la réception (25) d'un deuxième module (20).

11. Le dispositif permettant de trier des échantillons, de les transférer et collecter selon la revendication 1 est **caractérisé en ce que** le porte-échantillon (2) est formé par une plaque aimantée comprenant les chambres échantillons (21) lesquelles recevant chacune une microperle (3) aimantée, et qui peut être placée et bloquée dans la réception (25) d'un deuxième module (20).

12. Le dispositif permettant de trier des échantillons, de les transférer et collecter selon les revendications 1 et 10 et 11 est **caractérisé en ce que** le premier module (10) et le deuxième module (20) sont dotés de moyens, de préférences de tiges (24) et d'ouvertures (14) respectives et de formes complémentaires, disposées dans l'autre module pour permettre le positionnement précis et irréversible des modules (10; 20) l'un par rapport à l'autre.

13. Le dispositif permettant de trier des échantillons, de les transférer et collecter selon les revendications 1 et 10 ou 11 est **caractérisé en ce que** les chambres-échantillons (21) du porte-échantillons (2) sont dotés de passages (22) dans la zone du fonds.

14. Le dispositif permettant de trier des échantillons, de les transférer et ollecter selon la revendication 13 est **caractérisé en ce que** les passages (22) sont formées par une fritte présentant des pores perméables aux gaz et aux liquides, de 10 *µ*m de grandeur.

15. Le dispositif permettant de trier des échantillons, de les transférer et collecter selon la revendication 13 est **caractérisé en ce que** le porte-échantillons (2) est formé par une puce de silicium et que les passages (22) sont formés par des orifices de 10 *µ*m de grandeur et disposés de manière régulière , faisant office de tamis.

16. Le dispositif permettant de trier des échantillons, de les transférer et collecter selon les revendications 1 et 10 ou 11 est **caractérisé en ce qu'**il est possible d'appliquer au porte-échantillons (2) une sur- ou une sous-pression à travers un ou plusieurs canaux (23) et une chambre reliée (131) du module (20).

17. Le procédé permettant de faire fonctionner ledit dispositif à trier, transférer et collecter les échantillons de petites microperles servant de supports de phases solides et qui sont utilisées à des fins d'analyse et de synthèse suivant l'une ou l'autre des revendications précédentes, est **caractérisé en ce qu'**un premier module (10) est prévu, qui présente une zone de réception pour microperles (12) composée de plusieurs sous-zones de réception pour microperles (121) et recevant chacune une seule microperle (3), et que sur le premier module (10) sera montée une chambre (4) recevant des microperles (3), lesquelles sont exposées en permanence à un mouvement tourbillonnant pendant lequel est appliquée si longtemps une sous-pression dans les sous-zones recevant les microperles (121) et par l'intermédiaire des orifices (125); jusqu'à ce que se trouve une microperle (3) dans chacune des cavités (122), avant que la chambre (4) et les microperles (3) restantes ne soient enlevées, et que, pendant que de préférence le premier module (10) reste encore soumis à la sous-pression, un porte-échantillons (2) avec ses chambres échantillons (21) dont le nombre, la position et l'étendue correspondent dans l'essentiel aux sous-zones de réception de microperles (121), soit monté sur la zone de réception de microperles (12), en veillant à la position correcte des ouvertures , et qu'ensuite une pression normale ou une sur-pression sera d'abord appliquée au premier module (10) tandis qu'ensuite les chambres échantillons (21) du porte-échantillons (2) seront exposées à une pressions normale ou à une sous-pression durant le transfert des microperles (3) au porte-échantillons (2) avant même que le porte-échantillons (2) avec les microperles restantes (3) soit enlevé du module (10).

## Claims

1. Device for sample sorting, transferring and receiving small micro-beads (3), which serve as solid phase supports for the purpose of synthesis or analysis, **characterized in that** a first module (10) comprising at least one micro-bead receiving range (12) with a first surface (123) and a second surface (124) is provided, said micro-bead receiving range (12) includes a plurality of micro-bead receiving sub-ranges (121) that depend on the geometrical conditions of an attachable sample receiving support (2) as concerns the number, the position, and the extension of the single sample chambers (21), said micro-bead receiving sub-ranges (121) being so arranged that their central axes (X-X) correspond to the central axes (Y-Y) of the single sample chambers (21) of the sample receiving support (2), said sample chambers (21) being adapted to be filled or emptied, each of said micro-bead receiving sub-ranges (121) being provided with a recess (122) for receiving only one micro-bead (3), said recesses (122) being provided with an opening (125) each in their bottom range, the diameter of said opening (125) being smaller than the diameter of the micro-bead (3), each opening (125) being connected to a passage (126) that is directed towards the second surface (124) of the micro-bead receiving range (12) and to each of these passages (126) sub-pressures or over-pressures are applied via one or several channels (13) and/or a chamber (131), wherein said recess (122) is given such a depth (t) that the micro-bead (3), when inserted, is substantially flush with a first surface (123) of the micro-bead receiving range (12).

2. Device for sample sorting, transferring and receiving according to claim 1, **characterized in that** the module (10) is provided with at least one receptacle (11) into which a structured chip forming the micro-bead receiving range (12) is inserted in such a way that it can be arrested and replaced.

3. Device for sample sorting, transferring and receiving according to claim 1 or 2, **characterized in that** the recesses (122) are substantially inserted cylindrically into the micro-bead receiving range (12).

4. Device for sample sorting, transferring and receiving according to claim 1 or 2, **characterized in that** the recesses (122) in the micro-bead receiving range (12) are substantially provided conically and tapering towards the opening (125).

5. Device for sample sorting, transferring and receiving according to claim 1 or 2, **characterized in that** the passages (126) in the micro-bead receiving range (12) are substantially inserted cylindrically.

6. Device for sample sorting, transferring and receiving according to claim 1 or 2, **characterized in that** the passages (126) in the micro-bead receiving range (12) are substantially inserted conically and tapering towards the opening (125).

7. Device for sample sorting, transferring and receiving according to claims 1, 2, 4, and 6, **characterized in that** the micro-bead receiving range (12) is formed by a silicon chip.

8. Device for sample sorting, transferring and receiving according to claims 1, 2, 4, 6, and 7, **characterized in that** the conical recesses (122) and passages (126) are provided in such a way that the plane (B-B), which is being contacted by the recesses (122) and the passages (126) from respective sides and which is provided with openings (125), is asymmetrically arranged in direction of the first surface (123), related to the central plane (A-A) of the micro-bead receiving range (12).

9. Device for sample sorting, transferring and receiving according to claim 1, **characterized in that** a chamber (4), in particular a vortex chamber, is attachable onto the module (10), which contains at least one micro-bead receiving range (12), said chamber (4) being provided for filling the recesses (122) with one micro-bead (3) each, and into which said micro-beads (3) can be fed-in, and a sub-pressure being applied to at least one said channel (13) and to the chamber (131) being connected to said channel (13) and engaging into said micro-bead receiving range (12).

10. Device for sample sorting, transferring and receiving according to claim 1, **characterized in that** the sample receiving support (2) is formed by a micro-titer plate or nano-titer plate containing the sample chambers (21) for receiving one micro-bead (3) each, with said plate being adapted to be inserted into and arrested in a mount (25) of the second module (20).

11. Device for sample sorting, transferring and receiving according to claim 1, **characterized in that** the sample receiving support (2) is formed by a magnetizable plate containing sample chambers (21) for receiving one magnetizable micro-bead (3) each, with said plate being adapted to be inserted into and arrested in a mount (25) of the second module (20).

12. Device for sample sorting, transferring and receiving according to claims 1 and 10 or 11, **characterized in that** the first module (10) and the second module (20) are each provided with means, preferably such as pins (24), that are mounted at one module and complementarily openings (14) adapted to receive the pins (24) are arranged in the other module thus ensuring that the modules (10), (20) are accurately and unmistakably positioned relative to each other.

13. Device for sample sorting, transferring and receiving according to claim 1 and 10 or 11, **characterized in that** the sample chambers (21) of the sample receiving support (2) are provided with passages (22) in their chamber bottom range.

14. Device for sample sorting, transferring and receiving according to claim 13 **characterized in that** the passages (22) are formed by a frit that has pores with a dimension of 10 *µ*m which are permeable to gas or liquids.

15. Device for sample sorting, transferring and receiving according to claim 13, **characterized in that** the sample receiving support (2) is manufactured from a silicon chip and the passages (22) are formed by regularly distributed openings of a size of 10 *µ*m that are etched-in in a screen like pattern.

16. Device for sample sorting, transferring and receiving according to claim 1 and 10 or 11, **characterized in that** a sub-pressure or an overpressure can be applied to the sample receiving support (2) via at least one channel (23) and via a chamber (131) of the module (20), and said chamber being connected to said at least one channel (23).

17. Method for operating a device for sample sorting, transferring and receiving small micro-beads serving as solid phase supports for the purpose of synthesis or analysis according to one of the preceding claims, **characterized in that** a first module (10) is provided and comprises a micro-bead receiving range (12) with a plurality of micro-bead receiving sub-ranges (121) for receiving one micro-bead (3) each, that a chamber (4) containing micro-beads (3) is placed on said first module (10), said micro-beads (3) being subjected to a permanent motion, and that a sub-pressure is applied to said micro-bead receiving sub-ranges (121) via openings (125) at least until each recess (122) is occupied by one micro-bead (3), subsequently, the chamber (4) and the excess micro-beads (3) being removed, and that with a sub-pressure being preferably still applied to said first module (10) a sample receiving support (2) with sample chambers (21) contained therein, the number, position and extension of which substantially correspond to the micro-bead receiving sub-ranges (121), is attached with the corresponding open side to the micro-bead receiving range (12), and subsequently a normal pressure or an over-pressure is applied to said first module (10) and a normal pressure or a sub-pressure is applied to said sample chambers (21), and the micro-beads (3) are transferred to said sample receiving support (2), and subsequently the sample receiving support (2) filled with micro-beads (3) is separated from the module (10).
